# EUROPEAN PATENT SPECIFICATION

(11) **EP 4 294 878 B1**
(45) Date of publication and mention of the grant of the patent: **03.09.2025**
(21) Application number: 22703610.0
(22) Date of filing: 01.02.2022
(51) Int. Cl.: C09D 5/00, C09D 17/00, C09D 5/02

(54) **COATING COMPOSITION COMPRISING A PIGMENT PASTE COMPRISING AN ORGANIC PIGMENT AND AN ARYL-MODIFIED BRANCHED REACTION PRODUCT**
BESCHICHTUNGSZUSAMMENSETZUNG MIT EINER PIGMENTPASTE MIT EINEM ORGANISCHEN PIGMENT UND EINEM ARYLMODIFIZIERTEN VERZWEIGTEN REAKTIONSPRODUKT
COMPOSITION DE REVÊTEMENT COMPRENANT UNE PÂTE DE PIGMENT COMPRENANT UN PIGMENT ORGANIQUE ET UN PRODUIT DE RÉACTION RAMIFIÉ MODIFIÉ ARYLE

(30) Priority: 22.02.2021 EP 21158450
(43) Date of publication of application: 27.12.2023
(73) Proprietor: BASF Coatings GmbH, 48165 Münster (DE)
(72) Inventor: COLYER, Emerson Keith, Whitehouse, Ohio 43571 (US); PATEL, Chintankumar Jayantilal, 67056 Ludwigshafen (DE); JADHAV, Abhijit, Southfield, Michigan 48033 (US)
(74) Representative: BASF IP Association
(86) International application number: PCT/EP2022/052327
(87) International publication number: WO 2022/175076

(56) References cited:
- WO-A1-2014/046723
- WO-A1-2015/158649
- DE-A1- 102005 023 804
- DE-A1- 102005 023 806
- DE-A1- 102005 023 807
- US-A1- 2019 106 592

## Description

The present invention relates to coating compositions comprising a specific pigment paste, i.e. a pigment paste comprising an organic pigment and a specific aryl-modified branched reaction product. The present invention also relates to a process for producing a beforementioned coating composition, in particular aqueous coating compositions. The invention also relates to coatings (coating layers) produced from a beforementioned composition. The invention provides and allows for coating compositions and pigment pastes, respectively, in which organic pigments are finely distributed and stably integrated with optimal and thus small particle size, thereby enabling optimal coloristic properties of coatings layers like, in particular, high transparency (low scattering) and great color depth of multilayer coatings.

### Background information and prior art

This section provides information helpful in understanding the invention but that is not necessarily prior art. All references discussed below are incorporated herein by reference in their entirety.

For coating compositions, the pigments used to provide color must be reduced and stabilized at optimal particle sizes, which varies with the pigment, in order for the coatings to exhibit optimal color properties. To obtain optimal color properties when using certain organic pigments, it is necessary to reduce the pigment particle size much more than for typical inorganic pigments. Adsorption characteristics of organic pigments also differ, and thus, affect the color properties. Typically, resins are used to facilitate the mechanical reduction and subsequent stabilization of the pigment particles. Due to the different physical/chemical nature of organic pigments compared to inorganic pigments and much smaller optimal particle size of organic pigments, the resins used to disperse inorganic pigments are not effective for making optimal organic pigment dispersions. Moreover, resins that are specifically tailored to dispersing organic pigment are expensive. The above-named difficulties and challenges are even more severe in case of an aqueous coating composition, i.e. a composition which comprises as its dispersion medium not exclusively or primarily organic solvents (also called solvents); but, instead, comprises as its dispersion medium a significant fraction of water.

US 2019/0106592 A1 describes aryl-modified hyperbranched polyols being applied, in a first variant, in waterborne (i.e. aqueous) or, in a second variant, in solventborne compositions. While in waterborne compositions storage stability and low VOC are achieved for systems that comprise water-sensitive pigments, even without the use of chromium compounds, the publication mentions solventborne compositions that include small organic pigments and lead to optimal color properties of produced coating layers.

US 2016/0017175 A1, describes a coating composition that includes a flexible hyperbranched polyol preparable by (a) reacting a polyol comprising at least three hydroxyl groups with an aliphatic dicarboxylic acid having from 6 to 36 carbon atoms or an esterifiable derivative of the aliphatic dicarboxylic acid to form a hydroxyl-functional core; (b) reacting the core with a cyclic carboxylic acid anhydride to form a carboxylic acid-functional first intermediate product; and (c) reacting the first intermediate product with an epoxide-functional compound having one epoxide group to form the hyperbranched polyol. The coating composition may be cured to a coating layer having excellent flexibility.

U.S. Patent No. 6,646,049 discloses a binder for a coating composition with a principal resin polyol in combination with a hyper-branched polyol as a reactive intermediate and at least one crosslinker. The principal resin polyol is at least one of a polyester polyol, a polyether polyol, and a polyacrylate. Hyper-branched polyester polyols may be used as reactive diluents, which will cross-link with isocyanates, isocyanurates, epoxides, anhydrides, or their corresponding polyacids and/or aminoplasts to form a binder having particular properties, to help control the rheology of a coating system. The hyperbranched polyol, the principal resin polyol, or both optionally include a carbamate functional group. Coating compositions may be made using the binders together with additional components.

WO 2014/046723 A1 discloses a radiation-scattering composition, comprising a plurality of colloidal crystals or aggregates of colloidal crystals, each said crystal comprising radiation reflecting particles in a colloidal array and radiation absorbing particles dispersed in the crystals. The composition scatters radiation in a wavelength band in substantially all directions and absorbs radiation.

DE10 2005 023806 A1 describes a process for improving the color brilliance of a color polymer system which is composed of a matrix and discrete polymer particles which are distributed in the matrix in accordance with a defined spatial lattice structure and are obtained by filming an emulsion polymer with core/shell structure, the emulsion polymer being obtainable by polymerization of monomers in at least one first stage (monomers of the core) and subsequent polymerization of monomers in at least one further, second stage (monomers of the shell), which comprises polymerizing the monomers of the core in the presence of an absorber for electromagnetic waves especially a UV absorber.

DE10 2005 023807 A1 discloses a method for improving the elasticity of a colored polymer system (I) comprising a matrix and discrete polymer particles distributed according to a definite lattice structure and obtained by forming a film of an emulsion polymer with a core/shell structure made by two-stage emulsion polymerisation, in which the monomers for the shell are added to the polymerisation mixture in less than 90 minutes. Independent claims are included for (1) colored polymer systems (I) obtained by this method (2) a method for the production of substrates coated with (I) by coating (I) onto a temporary support (e.g. by film formation or by extrusion), transferring the support with the coating onto the substrate (e.g. by lamination or pressing) and optionally removing the temporary support.

Similarly, DE10 2005 023804 A1 discloses a process for improving the elasticity of a colored polymer system which consists of a matrix and discrete polymer particles which are distributed in the matrix according to a defined spatial lattice structure and is obtained by filming an emulsion polymer with a core/shell structure, wherein the emulsion polymer is obtainable by polymerizing monomers in at least a first stage (monomers of the core) and subsequent polymerizing monomers in at least a further, second stage (monomers of the shell), characterized in that the monomers of the core consist of at least 5% by weight of monomers with a glass transition temperature of less than 0 °C.

WO 2015/158649 A1 describes an inkjet ink including a) an aqueous medium; and b) capsules composed of a polymeric shell surrounding a core; wherein the capsules are dispersed in the aqueous medium using a dispersing group covalently bonded to the polymeric shell; wherein the dispersing group is selected from the group consisting of a carboxylic acid or salt thereof, a sulfonic acid or salt thereof, a phosphoric acid ester or salt thereof, a phosphonic acid or salt thereof, an ammonium group, a sulfonium group, and a phosphonium group; wherein the core contains one or more chemical reactants capable of forming a reaction product upon application of heat and/or light; and wherein the capsules have an average particle size of no more than 4 Micrometer as determined by dynamic laser diffraction.

US 2019/106592 A1 describes aryl-modified hyperbranched polyols are described, as are coating compositions containing these polyols. These polyols enable waterborne coating compositions that: include water-sensitive pigments; are storage stable; and have a low content of VOCs, as well as solventborne coating compositions that: include organic pigments; are storage stable; and enable certain enhanced color properties

### Problem and technical solution

It remains desirable to make improvements in coating compositions containing organic pigments with regard to optimal particle size and dispersion behavior of the pigments, including dispersion stability, thus leading to coating layers exhibiting optimal color properties. Also, the coating compositions should be an economically viable alternative to compositions comprising specialty resins that are tailored to dispersing organic pigments, while being more capable of stabilizing fine organic pigment particles than conventional dispersing resins.

It has been found that the problems identified above can be solved by means of a coating composition comprising a pigment paste, wherein the pigment paste comprises an organic pigment and an aryl-modified branched reaction product (P), comprising, in reacted form,
(a) a polyhydroxy-functional core moiety, and
(b) a shell moiety comprising polyalkylene oxide units and aromatic units, whereby the polyalkylene oxide units and aromatic units are covalently linked to the core moiety via units comprising functional groups being reactive with hydroxy groups.

The new coating composition is also referred to below as composition of the invention. Preferred embodiments of the invention are apparent from the description which follows and from the dependent claims.

Likewise provided by the present invention are a process for producing a beforementioned pigment paste and also a process for producing a beforementioned coating composition, in particular aqueous coating compositions.

The present invention also provides coating layers produced from a beforementioned composition, in particular multicoat paint systems in which one layer is produced by means of the composition of the invention.

It has emerged that through the use of the coating composition of the invention it is possible to achieve outstanding performance properties of coating layers and respective multicoat paint systems, respectively. Deserving of mention are optimal color properties which find reason in the excellent particle size and dispersion behavior of the pigments, including dispersion stability, in the coating compositions, in particular aqueous coating compositions.

### Description

In case of parameters or similar properties used for definitions, respective measurement methods are specified in the description and/or are explicitly mentioned in the experimental section.

The expression "one" (or equivalent expressions depicting singular) is to be understood as "at least one", if not expressly defined otherwise. Such express definition could be, for example, "only one" or "monofunctional", thus unambiguously clarifying that only "one" and not "more than one" is to be covered by the expression.

The coating composition of the invention comprises a pigment paste. As known by the person skilled in the art, pigment pastes are intermediate products to be applied in coating compositions enabling appropriate integration of pigments and respective particles into the composition. Pigment pastes in the coatings industry significantly ease the technically complex process of pigment dispersion and thus integration and stabilizing the pigment in the composition. The pigments in the paste are optimally wetted and very well-dispersed, such that an improved distribution state is attained in the coating composition too. This of course results in improved performance properties of the coating material and of the paint system produced therefrom, for example a particularly homogeneous color or color distribution in the paint system. In the production of these pastes, however, precisely matched paste binder components have to be used in order to obtain an optimally conditioned paste. Without the individual matching and exact selection of the paste binder, the particular pigment usually cannot be dispersed optimally, such that the performance properties of the ultimately resulting paint system are thus not optimal either. In other words: During paste production, i.e. when pigment and paste binder as well as solvents and/or water and, if necessary, further customary additives are mixed and milled/dissolved to decrease the particle size of the pigments, finely distribute and stably disperse them, the paste binder plays a major role. As outlined above in the introductory part, this is in particular a challenge for organic pigments, both regarding particle size reduction and stabilizing/dispersing. Surprisingly, the aryl-modified branched reaction product (P) is perfectly suited as such paste binder, meaning that the above-mentioned technical advantages are achieved.

It follows from the above, that in the context of the present invention the phrase "Coating composition comprising a pigment paste" means that the pigment paste is included into the coating composition as such, i.e. as pre-prepared, i.e. the intermediate product is mixed with the further components of the composition after its own production. Accordingly, therefore the compounds and solvents which the pigment paste is to comprise on its completion are mixed/dispersed into this same pigment paste before the paste as such is added as part of the preparation of the coating composition according to the invention. A pigment paste, obviously, is thus a composition itself which can be stored and transported individualized before, at some point in time, is applied for production of a coating composition.

The first constituent of the pigment paste is a specific reaction product (P).

The reaction product (P) comprises a core moiety and a shell moiety. The terms core moiety and shell moiety are applied for the sake of better clarity and distinction of the two essential parts of the reaction product (P), i.e. a first part that is located primary in the center of resulting molecules (i.e. the core moiety), and a second part that is covalently linked to the core moiety and thus primary located in outer area of the resulting molecules. In the presentence, the term "primary" refers to the fact that at least for the reason associated with technical syntheses, there cannot always be a theoretically idealized quantitative conversion being completely congruent with theoretical expectations. Rather, as the person skilled in the art knows, one can expect, for example, side reactions. Also, the phrase "moiety", is to be understood as describing chemical groups and units which do not necessarily need to be directly covalently linked to each other alone because they belong to the same moiety. For example, the shell moiety comprises individual units that are not directly covalently linked as they are reacted with different hydroxyl groups of the core moiety.

The reaction product (P) comprises, in reacted form, a polyhydroxy-functional core moiety, i.e. a moiety from which hydroxy groups of the molecules constituting the core are reacted as described below.

The molecules (or compounds) constituting the core are named compounds (c) and are polyhydroxy-functional, i.e. comprise, on average, at least three hydroxy groups. This is also in line with the fact that the reaction product (P) is branched, i.e. at least one branching side exists which allows for at least three reaction sides for three branches being outward oriented. The term "on average" considers that both (cI) monomeric polyhydroxy-functional and/or (cII) reaction products/oligomeric/polymeric (also named pre-polymeric) compounds can be applied as molecules constituting the core. As the person skilled in the art knows, class (cII) comprises compounds like oligomeric or polymeric compounds which may only be described by averaged parameters like, e.g. average molecular weight or average hydroxy functionality.

Compounds (c) may be selected from monomeric polyols (cI) like triols, dimers of triols, tetrols, dimers tetrols, and sugar alcohols. Nonlimiting examples of suitable polyols having three or more hydroxyl groups include glycerol, trimethylolmethane, trimethylolethane, trimethylolpropane, 2,2,3-trimethylolbutane-1,4-diol, 1,2,4-butanetriol, 1,2,6-hexanetriol, tris(hydroxymethyl)amine, tris(hydroxyethyl)amine, tris(hydroxypropyl)amine, erythritol, pentaerythritol, diglycerol, triglycerol or higher condensates of glycerol, di(trimethylolpropane), di(pentaerythritol), tri(pentaerythritol) pentaerythritol ethoxylate, pentaerythritol propoxylate, trishydroxymethyl isocyanurate, tris(hydroxyethyl) isocyanurate (THEIC), tris(hydroxypropyl) isocyanurate, inositols or sugars, such as glucose, fructose or sucrose, for example, sugar alcohols such as xylitol, sorbitol, mannitol, threitol, erythritol, adonitol (ribitol), arabitol (lyxitol), xylitol, duicitol (galactitol), maltitol, isomalt, polyetherols with a functionality of three or more, based on alcohols with a functionality of three reacted with ethylene oxide, propylene oxide and/or butylene oxide.

In certain preferred embodiments, the polyol (cI) is at least one of erythritol, pentaerythritol, di(pentaerythritol), tri(pentaerythritol), trimethylolethane, trimethylolpropane, trimethylolbutane, glycerol, ditrimethylolethane, ditrimethylolpropane, pentaerythritol ethoxylate, and pentaerythritol propoxylate

Also, as outlined above, the polyol (c) may be selected from compounds (cII) being reaction products/oligomeric/polymeric (pre-polymeric) compounds. Preference is given to compounds preparable by reaction of monomeric polyols with at least difunctional compounds capable of linking two or more of the polyols together. Suitable and preferred monomeric polyols are the above-named polyols (cI). Suitable and preferred compounds for reaction with the polyols are aliphatic dicarboxylic acid having from 6 to 36 carbon atoms or an esterifiable derivative of such aliphatic dicarboxylic acids. Another class of preferred compounds (cII) are preparable by reaction of monomeric polyols with monocarboxylic acids having at least two hydroxy groups, for example dimethylol propionic acid.

The above-named aliphatic dicarboxylic acid having from 6 to 36 carbon atoms or esterifiable derivative of the aliphatic dicarboxylic acid may be linear, branched, or cyclic, with the preference that cyclic dicarboxylic acids include a noncyclic segment of at least 6 carbon atoms (including carbon atoms of carboxylic acid groups). Nonlimiting examples of suitable dicarboxylic acids include adipic acid, suberic acid, azelaic acid, sebacic acid, undecanedioic acid (brassylic acid), dodecanedioic acid, traumatic acid, hexadecanedioic acid (thapsic acid), octadecanedioic acid, tetradecanedioic acid, and dimer fatty acids having 36 carbon atoms. In various embodiments, α,ω-dicarboxylic acids and dimer fatty acids having 36 carbon atoms are preferred. It is known that dimer fatty acids having 36 carbon atoms may have multiple isomers. Dimer fatty acids are commercially available, for example from BASF under the trademark EMPOL^{®}, from Arizona Chemical under the trademark UNIDYMETM, from Croda International Plc under the trademark PripolTM, and from Emery Oleochemicals as EMERY^{®} Dimer Acids. Esterifiable derivatives of the dicarboxylic acids having from 6 to 36 carbon atoms include their mono- or diesters with aliphatic alcohols having 1 to 4 carbon atoms, preferably the methyl and ethyl esters, as well as the anhydrides. A very preferred carboxylic acid is adipic acid.

For preparation of such preferred compounds (cII), the ratio of moles of monomeric polyol to moles of dicarboxylic acid or esterifiable derivative of the aliphatic dicarboxylic acid preferably is from 2.0 to 2.5, preferably from 2.0 to 2.2, and more preferably from 2.0 to 2.07 moles of the polyol per mole of the dicarboxylic acid or esterifiable derivative of the aliphatic dicarboxylic acid.

The reaction of the preferably monomeric polyol with the preferred aliphatic dicarboxylic acid or esterifiable derivative, i.e. the esterification reaction, may be carried out by known, standard methods. Reaction conditions like temperature, catalysts, solvents, and reaction processes may be individually adapted. For the sake of completeness, it is referred to [0024] to [0029] of US 2016/0017175 A1 and also to [0089] to [0094] of US 2019/0106592 A1 and the therein described step (a0), which are hereby explicitly and fully incorporated by reference.

Preparation of compounds of class (cII) obviously means to increase the (average) number of hydroxy functions per molecule and thus to increase the number of branching sides of the core moiety and thus the branching character of the reaction product (P).

Explicitly, the (average) number of hydroxyl groups of the compounds constituting the primary core moiety is from 3 to 20, more preferably from 6 to 16.

In case of compounds where the average number of hydroxy groups applies, this number may be determined via analysis of number-average molecular weight and hydroxy content.

In certain embodiments, where the core compound (c) is a compound (cII), in particular a reaction product of a polyol (cI) and an aliphatic dicarboxylic acid having 6 to 36 carbon atoms or an esterifiable derivative of the aliphatic dicarboxylic acid, it may be advantageous to conduct the below described reaction with aromatic carboxylic acids simultaneously to the preparation of the compound (cII), i.e. the core compound (cII) is prepared simultaneously with the step of appending the aromatic units of the shell moiety of the reaction product (P).

The reaction product comprises, in reacted form, a shell moiety comprising, as first essential part, aromatic units. The aromatic units are covalently linked to the core moiety via units comprising functional groups being reactive with hydroxyl groups. In other words: The aromatic units are covalently linked to the core moiety by reaction of respective functional groups with the hydroxy groups of the core. Accordingly, the aromatic units may be introduced via compounds comprising an aromatic unit and a unit comprising at least one functional group being reactive with hydroxyl groups. Such compounds are also named compounds (d). Also, the aromatic units may be introduced by a two-step procedure, i.e. a first reaction of the core moiety and a part of its hydroxyl groups, respectively, with a first compound (d1) having a first functional group being reactive with hydroxyl groups and having a second functional group being reactive with a second compound (d2), whereby this second compound (d2) comprises aromatic groups and a functional group being reactive with the second functional group of compound (d1).

Compounds (d) may be chosen and varied within a wide range of compounds as long as the above-mentioned criteria are fulfilled. Potential functional groups being reactive with hydroxyl groups are, for instance, carboxy, isocyanate or anhydride groups. The person skilled in the art knows what compounds are generally applicable and can also choose, for example, respective reaction conditions to realize appending respective aromatic units.

In a preferred embodiment, the aromatic units are appended via reaction of hydroxy groups of the core compound with an aromatic or araliphatic (both aromatic and aliphatic) carboxylic acid, i.e. via esterification reaction of carboxylic acid groups and hydroxy groups. Again, such esterification may be carried out by known standard methods. For the sake of completeness, it is referred to [0089] to [0094] of US 2019/0106592 A1 and the therein described step (a). These paragraphs hereby are explicitly and fully incorporated by reference.

Accordingly, preferred compounds (d) are selected from aromatic or araliphatic (both aromatic and aliphatic) carboxylic acids. Particular preference is given to carboxylic acid of the formula (I): 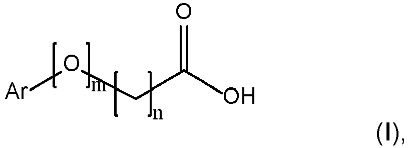 wherein: Ar is an optionally substituted aryl group, which is a monocyclic or condensed polycyclic aromatic hydrocarbon group; m is 0 or 1; and n is 0 or an integer from 1 to 8.

**In** certain embodiments, Ar is an optionally substituted monocyclic aromatic hydrocarbon group, preferably a phenyl group optionally bearing from one to three substituents selected from the group consisting of a straight or branched chain alkyl of 1 to 6 carbon atoms, an alkoxy of 1 to 6 carbon atoms, alkoxy alkyl wherein the alkyl moieties have 1 to 6 carbon atoms, halo, phenyl, and hydroxy. **In** certain embodiments, Ar represents an optionally substituted condensed polycyclic aromatic hydrocarbon group, preferably a naphthyl, anthranyl, or phenanthryl group optionally bearing from one to three substituents selected from the group consisting of a straight or branched chain alkyl of 1 to 6 carbon atoms, an alkoxy of 1 to 6 carbon atoms, alkoxy alkyl wherein the alkyl moieties have 1 to 6 carbon atoms, halo, phenyl, and hydroxy.

**In** certain embodiments, the carboxylic acid (d) is represented by formulae (II) or (III): 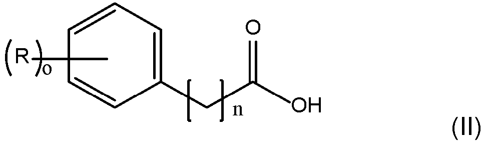 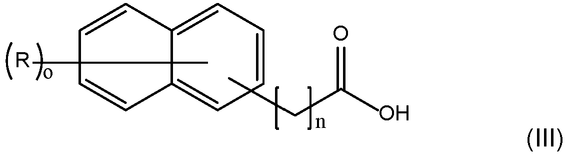 wherein, in formulae (II) and (III), n is 0 or an integer from 1 to 8, preferably 0 or an integer from 1 to 4, particularly 0 or 1; o is 0 or an integer from 1 to 3; and each R, if present, is independently selected from the group consisting of a straight or branched chain alkyl of 1 to 6 carbon atoms, an alkoxy of 1 to 6 carbon atoms, and an alkoxy alkyl wherein the alkyl moieties have 1 to 6 carbon atoms, halo, phenyl, and hydroxy. Examples of compounds according to formulae (II) and (III) are illustrated below:

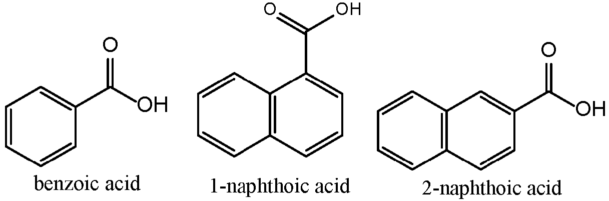

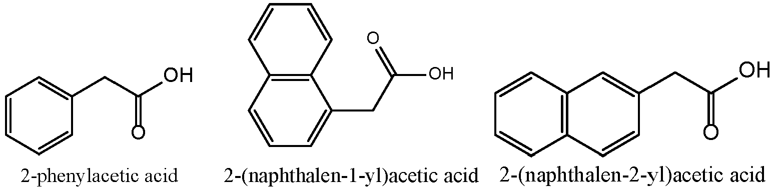

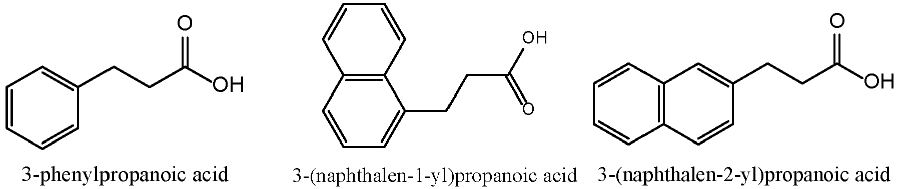

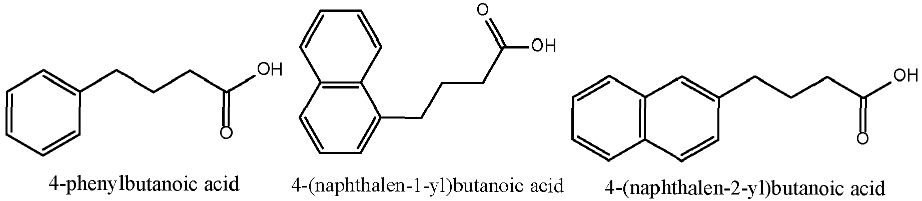

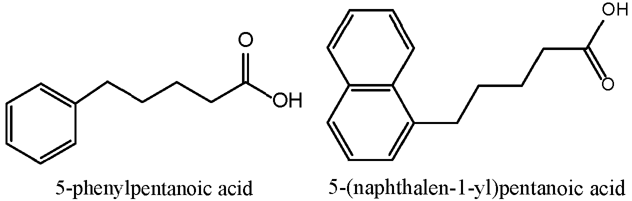

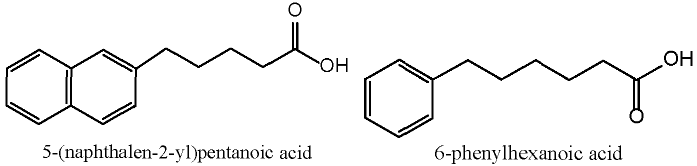

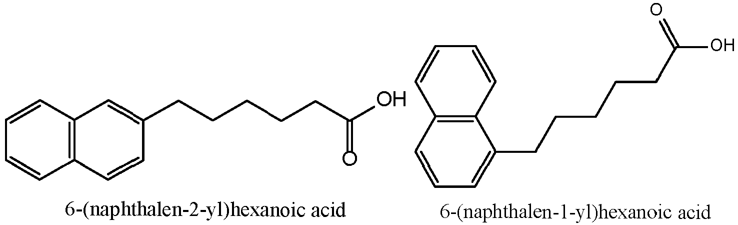

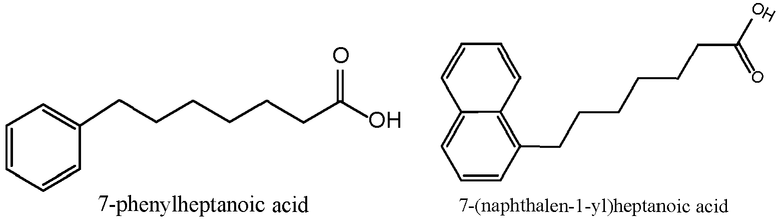

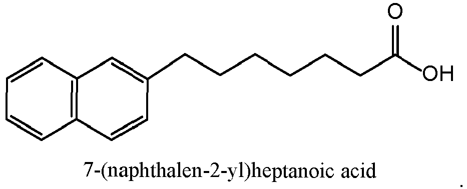

In certain embodiments, the aromatic carboxylic acid of step (a) is an aryloxy aromatic carboxylic acid represented by formulae (IV) or (IV): 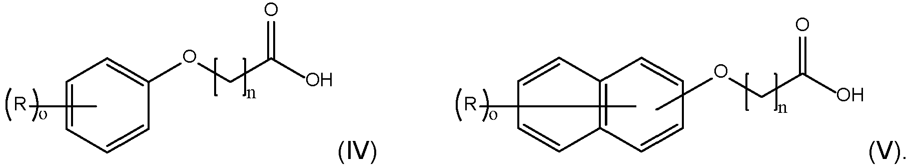 wherein, in formulae (IV) and (V), n is 0 or an integer from 1 to 8, preferably from 0 or an integer from 1 to 4, particularly 0 or 1; o is 0 or an integer from 1 to 3; and each R, if present, is independently selected from the group consisting of a straight or branched chain alkyl of 1 to 6 carbon atoms, an alkoxy of 1 to 6 carbon atoms, alkoxy alkyl wherein the alkyl moieties have 1 to 6 carbon atoms, halo, phenyl, and hydroxy. Examples of compounds according to formulae (IV) and (V) are illustrated below:

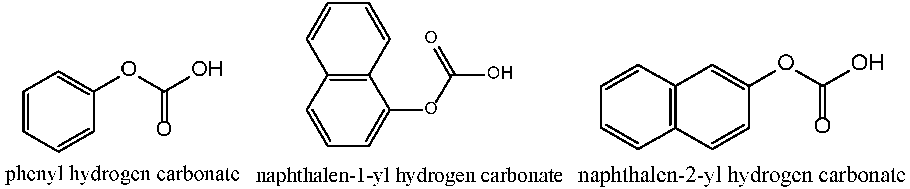

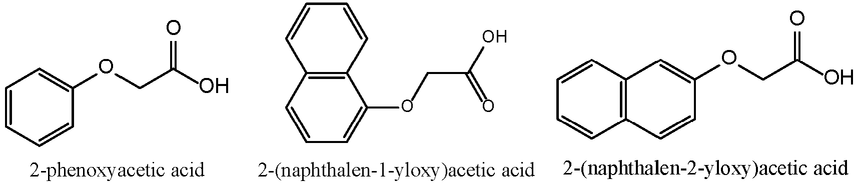

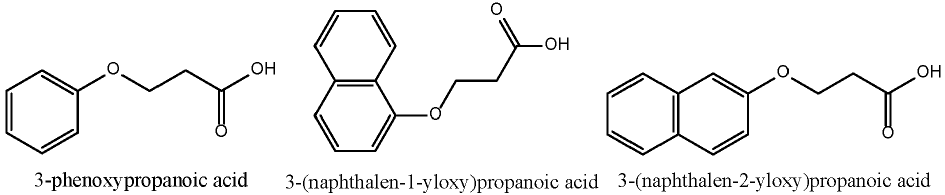

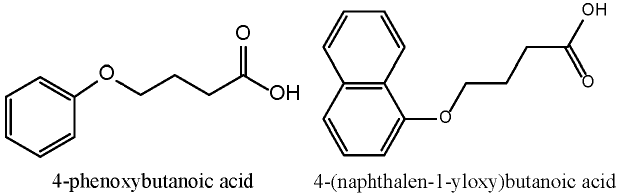

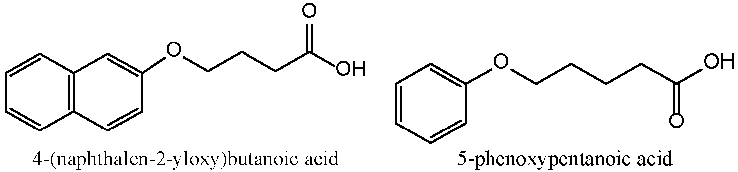

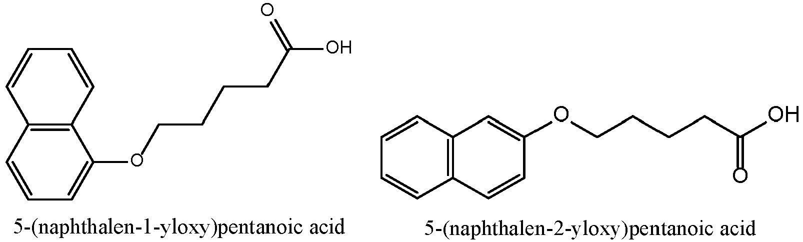

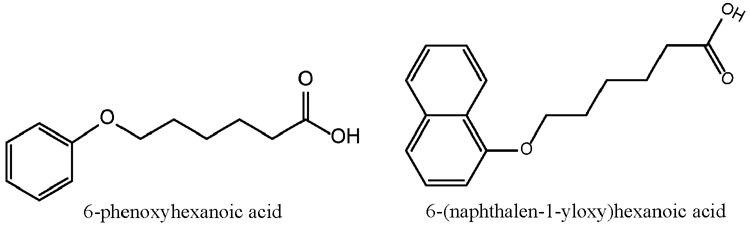

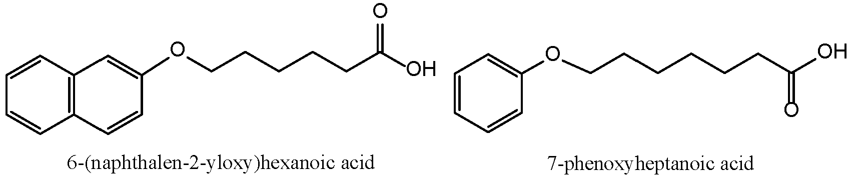

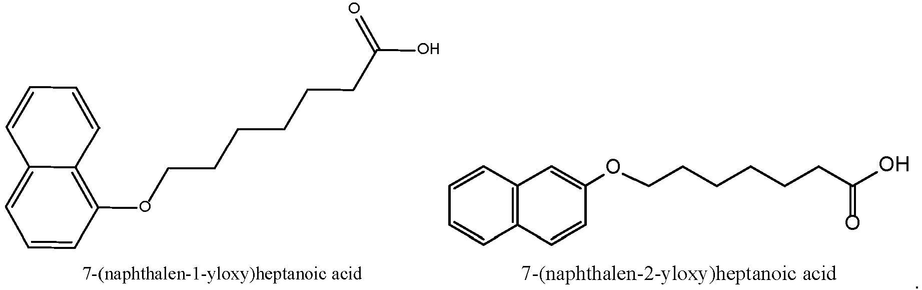

In various embodiments, the equivalent ratio of hydroxyl groups of the core compound to carboxylic acid groups of the aromatic or araliphatic carboxylic acid is from 1.5 to 3.5 equivalents of hydroxyl groups per carboxylic acid group. In case of simultaneous formation of the core compound as described above, i.e. reaction of, for example, a polyol (cI) and an aliphatic dicarboxylic acid having 6 to 36 carbon atoms or an esterifiable derivative of the aliphatic dicarboxylic acid, the amount of hydroxyl groups of the core compound, quite obviously, is calculated by deducting the amount of carboxylic acid groups of the dicarboxylic acid from the amount of hydroxyl groups of the polyol (cI).

The reaction product also comprises, in reacted form, in the shell moiety as second essential part polyalkylene oxide units. These units are covalently linked to the core moiety via units comprising functional groups being reactive with hydroxyl groups. In other words: The polyalkylene oxide units are covalently linked to the core moiety by reaction of respective functional groups with the hydroxy groups of the core. Accordingly, the polyalkylene oxide units may be introduced via compounds comprising a polyalkylene oxide unit and a unit comprising functional groups being reactive with hydroxy groups. Such compounds are also named compounds (e). Also, the polyoxyalkylene units may be introduced by a two-step procedure, i.e. a first reaction of the core moiety and a part of its hydroxyl groups, respectively, with a first compound (e1) having a first functional group being reactive with hydroxyl groups and having a second functional group being reactive with a second compound (e2), whereby this second compound (e2) comprises polyalkylene oxide groups and a functional group being reactive with the second functional group of compound (e1).

Compounds (e) may be chosen and varied within a wide range of compounds as long as the above-mentioned criteria are fulfilled. Potential functional groups being reactive with hydroxyl groups are, for instance, carboxy, isocyanate and (cyclic) carboxylic acid anhydride groups. The person skilled in the art knows what compounds are generally applicable and can also choose, for example, respective reaction conditions to realize appending respective polyalkylene oxide units. It is preferred that the compound (e) is monofunctional with regard to functional groups being reactive with hydroxyl groups. Reason is that by this means without complicated course of reaction it can be guaranteed that the compound (e) is appended to only one core moiety and not two core moieties which then would be interlinked/bridged by a compound (e).

In a preferred embodiment, the polyalkylene oxide units are appended via reaction of hydroxy groups of the core compound with a compound having a polyalkylene oxide unit and a functional group selected from isocyanate groups, carboxylic acid groups and cyclic carboxylic acid anhydride groups. Even more preferably, the functional group is selected from isocyanate groups. As discussed above, it is preferred that the compound (e) is monofunctional with regard to the functional group being reactive with hydroxyl groups. In case of cyclic carboxylic acid anhydride groups, however, it is worth to mention that this groups formally may also be regarded as group comprising two carboxyl groups, meaning that bridging of two core moieties is, in principle possible. However, as the person skilled in the art knows, a cyclic carboxylic acid anhydride, alone for the reason of ring tension, is significantly more reactive with a hydroxyl group than a free carboxy groups, meaning that by control of reaction conditions, e.g. temperature and/or catalysts, reaction of only or at least predominantly cyclic anhydride can be ensured, ultimately leading to a reaction product having free carboxylic acid groups. Accordingly, in terms of the above-mentioned preferred monofunctional character of compound (e), in case of a cyclic carboxylic anhydride the anhydride is regarded as group being reactive with hydroxyl group, while the resulting free carboxy group is not regarded as such group as it is not existent before reaction and also because its generally given reactivity can be suppressed by the reaction conditions as described above.

Still, the experience showed that reaction with mono-isocyanate compounds (e) shows advantages with regard to polydispersity of the resulting reaction product, which likewise is the reason why isocyanate as functional group is preferred.

The polyalkylene oxide units of reaction product (e) may be, for example, -((CH₂-CHR₁)ₙ-O)ₘ- in which R₁ means hydrogen (H) and/or an alkyl residue with 1 to 3 carbon atoms, preferably hydrogen and/or methyl, whereby the residues R₁ may be identical or different, n means 1 to 3 and m means 10 to 100, preferably 20 to 50. Examples of such units are polytetramethylene oxides, polypropylene oxides, polyethylene oxides or mixed copolymers as block copolymers which contain different of the before mentioned polyalkylene oxides. Preference is given to polypropylene oxides and/or polyethylene oxides as well as mixed copolymers thereof, while polyethylene oxides are particularly preferred.

The above means that compounds (e), in a first preferred embodiment, are selected from compounds having polyoxyalkylene units and only one isocyanate group, while not having any further functional group being reactive with hydroxy groups. The above defined preferences with regard to the polyoxyalkylene unit of course do also apply in the context of these compounds (e).

As such, these compounds (e) be can be produced by reacting standard poly(alkylene glycol) alkyl ether (i.e. poly alkylene glycols having one hydroxyl groups etherified with an alkyl group) with a diisocyanate compound resulting in a compound having one isocyanate group.

As diisocyanate compound the well-known aliphatic, cycloaliphatic, aliphatic-cycloaliphatic, aromatic, aliphatic-aromatic and/or cycloaliphatic-aromatic diisocyanates may be employed by the skilled person. Mention may be made, by way of example, of the following diisocyanates: 1,3- or 1,4-phenylene diisocyanate, 2,4- or 2,6-tolylene diisocyanate, 4,4'- or 2,4'-diphenylmethane diisocyanate, 1,4- or 1,5-naphthylene diisocyanate, diisocyanatodiphenyl ether, trimethylene diisocyanate, tetramethylene diisocyanate, ethylethylene diisocyanate, 2,3-dimethylethylene diisocyanate, 1-methyltrimethylene diisocyanate, pentamethylene diisocyanate, 1,3-cyclopentylene diisocyanate, hexamethylene diisocyanate, cyclohexylene diisocyanate, 1,2-cyclohexylene diisocyanate, octamethylene diisocyanate, trimethylhexane diisocyanate, tetramethylhexane diisocyanate, decamethylene diisocyanate, dodecamethylene diisocyanate, tetradecamethylene diisocyanate, isophorone diisocyanate (IPDI), 2-isocyanatopropylcyclohexyl isocyanate, dicyclohexylmethane 2,4'-diisocyanate, dicyclohexylmethane 4,4'-diisocyanate, 1,4- or 1,3-bis(isocyanatomethyl)cyclohexane, 1,4- or 1,3- or 1,2-diisocyanatocyclohexane, 2,4- or 2,6-diisocyanato-1-methylcyclohexane, 1-isocyanatomethyl-5-isocyanato-1,3,3-trimethylcyclohexane, 2,3-bis(8-isocyanatooctyl)-4-octyl-5-hexylcyclohexene, tetramethylxylylene diisocyanates (TMXDI) such as m-tetramethylxylylene diisocyanate, or mixtures of these diisocyanates.

Reaction conditions of hydroxyl and isocyanate are absolute standard and well known, whereby in the here discussed case it is important to choose conditions which ensure reaction of only one isocyanate group with the poly(alkylene glycol) alkyl ether. For at least this reason, one particularly preferred isocyanate is isophorone diisocyanate (IPDI). Reason is that the two isocyanate groups of this established and well available diisocyanate are not equivalent in terms of reactivity, meaning that by smart control of reaction conditions like, for example, temperature and catalyst selection, a only one sided reaction of the isocyanate can be ensured (thereby, of course, acknowledging, that side reactions are practically unavoidable and must be accepted).

In a second preferred embodiment (however, less preferred than the above described first preferred embodiment with specific compounds (e)), the two above-mentioned compound (e1) and (e2) are applied.

Compounds (e1) and (e2) may be chosen and varied within a wide range of compounds as long as the above-mentioned criteria are fulfilled. The person skilled in the art knows what compounds are generally applicable and can also choose, for example, respective reaction conditions to realize appending respective polyalkylene oxide units.

Preferred compounds (e1) are selected from cyclic carboxylic acid anhydride components like, for example, maleic anhydride, hexahydrophthalic anhydride, methylhexahydrophthalic anhydride, tetrahydrophthalic anhydride, phthalic anhydride, succinic anhydride, trimellitic anhydride, methyltetrahydrophthalic anhydride, adipic anhydride, glutaric anhydride, malonic anhydride, itaconic acid anhydride, 5-methyl-5-nobornenedicarboxylic acid anhydride, 1,2-cyclohexanedicarboxylic acid anhydride, isatoic acid anhydride, diphenic acid anhydride, substituted anhydrides, particularly including lower-alkyl substituted acid anhydrides such as butylsuccinic acid anhydride, hexylsuccinic acid anhydride, octylsuccinic acid anhydride, butylmaleic acid anhydride, pentylmaleic acid anhydride, hexylmaleic acid anhydride, octylmaleic acid anhydride, butylglutaric acid anhydride, hexylglutaric acid anhydride, heptylglutaric acid anhydride, octylglutaric acid anhydride, alkylcyclohexanedicarboxylic acid anhydrides and alkylphthalic acid anhydrides such as 4-n-butylphthalic acid anhydride, hexylphthalic acid anhydride, and octylphthalic acid anhydride. Particular preference is given to succinic anhydride.

As compound (e1), per definition, comprises two functional groups for reaction (cf. above), the person skilled in the art directly understands that with regard to the preferred cyclic carboxylic acid anhydrides and the fact that these anhydrides formally may also be regarded as compounds having two carboxyl groups (whereby the second one results after reaction of the first one in form of part of the cyclic anhydride), it is to be understood that for such cyclic carboxylic acid anhydrides, per definition, both functional groups of compound (e1) are carboxylic acid groups. Accordingly, in terms of the before-mentioned preferred difunctional character of compound (e1), in case of a cyclic carboxylic anhydride the anhydride is regarded as having two functional groups, i.e. two carboxylic acid groups.

Accordingly, in this preferred embodiment, the second compound (e2) comprises polyalkylene groups and a functional group being reactive with carboxy groups. Preference is given to hydroxyl groups, meaning that the reaction runs as esterification. Accordingly, preferred compounds (e2) are the above described poly(alkylene glycol) alkyl ethers. The above defined preferences with regard to the polyoxyalkylene unit of course do also apply in the context of these compounds (e2).

Even if by means of this second explicitly described embodiment appropriate reaction products (P) may be formed, these products are not as favorable as those products prepared via compounds (e), especially compounds (e) having one isocyanate groups, due to a comparably high polydispersity.

The equivalent ratio of hydroxyl groups of the core compound to functional groups being reactive with hydroxyl groups of compounds (e) or (e1) is from 2 to 14 equivalents of hydroxyl groups per functional group being reactive with hydroxyl groups.

As described above, the equivalent ratio of hydroxyl groups of the core compound to carboxylic acid groups of the aromatic or araliphatic carboxylic acid (d) is from 1.5 to 3.5 equivalents of hydroxyl groups per carboxylic acid group.

**In** both the above equivalent ratios it is referred to the amount of hydroxyl groups of the original, non-reacted core compound. Accordingly, it is clear that the amount of carboxylic acid groups of compound (c) and reactive groups of compound (e) or (e1) preferably does not exceed the amount of hydroxyl groups of the core compound (as this would mean that non reacted compound (d) and/or (e) and/or (e1) is present in the reaction mixture).

While it is generally possible to react the core compound (c) with compound (e) or (e1) and (e2) before or simultaneously with compound (d), it is preferred to (i) firstly react compounds (c) and (d), while afterwards (ii) reacting the intermediate resulting from step (i) with compound (e) or (e1) and (e2).

Result of the above described process is a reaction product (P).

**In** preferred embodiments of the present invention, the reaction product also comprises, in the shell moiety, carboxylic acid groups which are covalently linked to the core moiety via units comprising functional groups being reactive with hydroxy groups. These groups may serve for anionic stabilization in aqueous media.

Accordingly, the carboxylic acid groups are introduced via compounds comprising a carboxylic acid group and a group being reactive with hydroxyl groups, for example a (further) carboxylic acid group. Such compounds are also named compounds (f). Cyclic carboxylic anhydrides may serve as such compounds (f), whereby for the reasons already outlined above these anhydrides formally are then to be regarded as compounds having two carboxyl acid groups. **In** fact, such cyclic carboxylic anhydrides are particularly preferred compounds (f). Reason is, as in principle also already described above, that due to non-equivalent reactivity of the formally two carboxylic acid groups, reaction conditions can be chosen that easily allow for appending the anhydride via ring opening addition to the core moiety without having any or at least only neglectable reaction of the resulting free carboxylic acid group (meaning that no or at least only neglectable bridging of two core molecules occurs, but the free carboxylic acid groups remains for anionic stabilization). Examples and preferred versions of such cyclic carboxylic acid anhydrides are already mentioned above.

As described above, during production of the reaction product compounds (e1) preferably being cyclic carboxylic acid anhydrides may be applied. In this situation, compounds (e1) and (f) preferably are the same, meaning that the here discussed appending of carboxylic acid groups is preferably conducted within the step of appending the compound (e1). Consequently, in this situation, the amounts of compounds (e1) and (e2) are aligned in as much as the amount of (e1) is in any case higher than (e2), meaning that residual free carboxyl groups remain.

In case of a reaction product produced via a compound (e), appending carboxylic acid groups obviously is conducted in a separate step, i.e. by reaction of hydroxyl groups of the core with a compound (f). Even if reaction with compound (f) generally can be conducted at different stages and/or simultaneously with other reactions described above, it turned out to be advantageous to have this reaction conducted after the above reactions of the core or the respective intermediate with compounds (d) and (e).

The acid number of the reaction product (P) preferably is from 10 to 60 mg KOH/g (referring to the reaction product (P) as such, i.e without potential solvents for dispersing or dissolving the reaction product (P); the amount of reaction product (P) in such dispersions or solutions may be determined via non-volatile content) .

The amount of reaction product (P) preferably is from 1 to 20 % by weight, preferably 2.5 to 12.5 % by weight, in each case based on total weight of the pigment paste (again, referring to the reaction product (P) as such; this principle also applies within the present application for any and all further specifications on amounts or properties, if not explicitly stated differently).

The second essential constituent of the pigment paste is an organic pigment. The pigment may be chosen and varied within a wide range of pigments as known by the person skilled in the art, such as azo pigments (for example monoazo, disazo, ß-naphthol, benzimidazolone, condensation, metal complex, isoindolinone, isoindoline) and polycyclic pigments (phthalocyanine, quinacridone, perylene, perinone, diketopyrrolo pyrrole, thioindigo, anthraquinone (indanthrone, anthrapyrimidine, flavanthrone, pyranthrone, anthanthrone, dioxazine, triarylcarbonium, quinophthalone)). In terms of color, pigments like metallized and non-metallized azo reds, quinacridone reds and violets, perylene reds, copper phthalocyanine blues and greens, carbazole violet, monoarylide and diarylide yellows, benzimidazolone yellows, tolyl orange, naphthol orange, and so on, may be mentioned.

As generally known and also already outlined above, pigment pastes are formulations of pigments in carrier materials (also named paste resins or paste binders), namely organic resin materials in which the pigments are dispersed and present in a higher concentration than in the later use. The later use is generally in the production of coating compositions. More particularly, in such pigment pastes, the weight ratio of pigments to polymers is generally greater than in coating compositions in which the paste is used. As well as the carrier materials (different polymers, also called paste binders), water and/or organic solvents are generally also present. Different additives such as wetting agents are also usable.

As also already mentioned above, the use of pigment pastes in the coatings industry significantly eases the technically complex process of pigment dispersion. For example, dust-free processing of pigments during the formulation of coating materials is assured. In addition, the pigments in the paste are optimally wetted and very well-dispersed, such that an improved distribution state is attained in the coating material too. This of course results in improved performance properties of the coating material and of the paint system produced therefrom, for example a particularly homogeneous color or color distribution in the paint system. Within the meaning of the present invention, quite obviously the reaction product (P) serves as carrier material (paste binder) to provide for finely distributed and stably dispersed organic pigments.

Accordingly, production of the pigment paste requires that reaction product (P) and organic pigments are brought into contact under a shear high enough to effect dispersion of the pigments, i.e. to wet the surface of the pigment particles with the dispersing resin (P). Thereby, as also generally known, the shear introduced by this milling process also causes to break pigment agglomerates down to smaller particle sizes and eventually to the primary pigment particles. The breaking of the agglomerates and wetting of the primary pigment particles are important for pigment stability and color development. Pigments may be utilized in amounts typically of up to, for example, 2 to 40 % by weight, preferably 5 to 15 % by weight, in each case based on total weight of the pigment paste. The amount of pigment used depends on the nature of the pigment and on the depth of the color and/or the intensity of the effect it is intended to produce, and also by the dispersibility of the pigments.

The dispersant to pigment ratio (also called ratio of reaction product (P) to pigment) in the pigment paste preferably is at least 0.2, preferably at least 0.5, more preferably at least 0.55 (in each case based on weights). Preferred ranges are from 0.2 to 1.5, more preferred 0.5 to 0.8 and even more preferred from 0.55 to 0.75.

The present invention also provides a process for producing a pigment paste comprising a reaction product (P) and an organic pigment.

In accordance with what is outlined above, the process for producing a pigment paste comprises (1) contacting a reaction product (P) with an organic pigment, preferably in the presence of water, organic solvents and, where applicable, additives like wetting agents, resulting in a respective mixture and (2) exposing the mixture according to (1) to a shear force. Applicable organic solvents are, for example, propylene glycol n-butyl ether, Dowanol PnB, ethylene glycol n-butyl ether and/or butyl cellosolve.

Specifically, step (1) of the production of the pigment paste preferably is conducted by (1a) preparing a dispersion comprising the reaction product (P), water, organic solvents and, where applicable, additives, and (1b) mixing the dispersion of step (1a) with the organic pigment.

Step (2), i.e. the step of exposing the mixture of step (1) to a shear force to effect effective dispersing and also reducing the particle size of the pigment, preferably is conducted via milling. Respective milling equipment like high energy mills and respective procedures are well known a can be chosen depending on the individual case. The milling process preferably is conducted via application of milling beads (which are well-known) for a duration of, for example, 1 to 20 hours. Such beads generally have particle sizes of, for example, about 0.1 to 10 mm (diameter). Also, the milling process may be conducted in different milling steps, which, for example differ in terms of bead size, weight ratio of mixture and beads and/or milling duration. After milling, the prepared dispersion is separated from the milling beads, in particular by filtration to result in a pigment paste according to the invention.

Weight ratios of the respective constituents of the pigment paste are, for example, 1 to 20 wt.-% of reaction product (P), 2 to 40 wt.-% of organic pigment, 40 to 90 wt.-% of water and 2 to 20 wt.-% of organic solvent, in each case based on the total weight of the pigment paste.

The pigment paste prepared by the process according to the invention is characterized by outstanding pigment particle size properties (i.e. comparable small particle size) and pigment fine distribution and thus good dispersion behavior and stability. These properties may be verified by, for example, low scattering as determined via lightness of cured coating layers as shown in the example section below.

The amount of pigment paste in the inventive coating composition may be selected according to individual needs and requirements and may be chosen as low as 0.1 % by weight (for example in tinted clear coating compositions) or as high as 25 % by weight. Accordingly, a preferred range is from 0.1 to 25 % by weight, based on the total weight of the coating composition. Even more preferably the range is from 2.5 to 15 % by weight, preferably from 3.5 to 10 % by weight, in each case based on the total weight of the coating composition.

The coating composition according to the invention may further comprise constituents as known and regularly used in coating compositions.

The coating composition may include other resins or polymers. Examples of resins or polymers include (meth)acrylate polymers (also known as acrylic polymers or resins), polyesters, polyethers and/or polyurethanes. The other resins or polymers may have functionality reactive with a crosslinker which may be contained in the coating composition for the other resins or polymer. In certain preferred examples, the coating composition includes a further resin or polymer having hydroxyl groups, carbamate groups, or a combination of such groups. In various embodiments, the coating composition contains a hydroxyl-functional acrylic polymer, hydroxyl-functional polyester, and/or hydroxyl-functional polyurethane. Also, polysiloxane polyols may be comprised. These polymers are well known to the person skilled in the art and are widely used as binder polymers in coating compositions. Still, the following paragraphs describe some more details on such components (with more detailed and thus deviating naming, if appropriate).

Polyvinyl polyols, such as acrylic (polyacrylate) polyol polymers that may be used as the hydroxy-functional material. Acrylic polymers or polyacrylate polymers may be copolymers of both acrylic and methacrylic monomers as well as other copolymerizable vinyl monomers. The term "(meth)acrylate" is used for convenience to designate either or both acrylate, and methacrylate, and the term "(meth)acrylic" is used for convenience to designate either or both acrylic and methacrylic.

Polyesters polyols may be prepared by reacting: (a) polycarboxylic acids or their esterifiable derivatives, together if desired with monocarboxylic acids, (b) polyols, together if desired with monofunctional alcohols, and (c) if desired, other modifying components. Nonlimiting examples of polycarboxylic acids and their esterifiable derivatives include phthalic acid, isophthalic acid, terephthalic acid, halophthalic acids such as tetrachloro- or tetrabromophthalic acid, adipic acid, glutaric acid, azelaic acid, sebacic acid, fumaric acid, maleic acid, trimellitic acid, pyromellitic acid, tetrahydrophthalic acid, hexahydrophthalic acid, 1,2-cyclohexanedicarboxlic acid, 1,3-cyclohexane-discarboxlic acid, 1,4-cyclohexane-dicarboxlic acid, 4-methylhexahydrophthalic acid, endomethylenetetrahydropthalic acid, tricyclodecanedicarboxlic acid, endoethylenehexahydropthalic acid, camphoric acid, cyclohexanetetracarboxlic acid, and cyclobutanetetracarboxylic acid. The cycloaliphatic polycarboxylic acids may be employed either in their cis or in their trans form or as a mixture of the two forms. Esterifiable derivatives of these polycarboxylic acids include their single or multiple esters with aliphatic alcohols having 1 to 4 carbon atoms or hydroxy alcohols having up to 4 carbon atoms, preferably the methyl and ethyl ester, as well as the anhydrides of these polycarboxylic acids, where they exist. Nonlimiting examples of suitable monocarboxylic acids that can be used together with the polycarboxylic acids include benzoic acid, tert-butylbenzoic acid, lauric acid, isonoanoic acid and fatty acids of naturally occurring oils. Nonlimiting examples of suitable polyols include any of those already mentioned above, such as ethylene glycol, butylene glycol, neopentyl glycol, propanediols, butanediols, hexanediols, diethylene glycol, cyclohexanediol, cyclohexanedimethanol, trimethylpentanediol, ethylbutylpropanediol ditrimethylolpropane, trimethylolethane, trimethylolpropane, glycerol, pentaerythritol, dipentaerythritol, tris-hydroxyethyl isocyanate, polyethylene glycol, polypropylene glycol, and polyols derived from natural oils. Nonlimiting examples of monoalcohols that may be used together with the polyols include butanol, octanol, lauryl alcohol, and ethoxylated and propoxylated phenols. Nonlimiting examples of suitable modifying components include compounds which contain a group which is reactive with respect to the functional groups of the polyester, including polyisocyanates and/or diepoxide compounds, and also if desired, monoisocyanates and/or monoepoxide compounds. The polyester polymerization may be carried out by known standard methods. This reaction is conventionally carried out at temperatures of between 180°C and 280°C, in the presence if desired of an appropriate esterification catalyst. Typical catalysts for the esterification polymerization are protonic acids, Lewis acids, titanium alkoxides, and dialkyltin oxides, for example lithium octanoate, dibutyltin oxide, dibutyltin dilaurate, para-toluenesulfonic acid under reflux with small quantities of a suitable solvent as entraining agent such as an aromatic hydrocarbon, for example xylene, or a (cyclo)aliphatic hydrocarbon, for example cyclohexane.

Polyurethanes having hydroxyl functional groups may also be used in the coating compositions along with the aryl-modified hyperbranched polyol. Examples of suitable polyurethane polyols include polyester-polyurethanes, polyether-polyurethanes, and polycarbonate-polyurethanes, including, without limitation, polyurethanes polymerized using as polymeric diol reactants polyethers and polyesters including polycaprolactone polyesters or polycarbonate diols. These polymeric diol-based polyurethanes are prepared by reaction of the polymeric diol (polyester diol, polyether diol, polycaprolactone diol, polytetrahydrofuran diol, or polycarbonate diol), one or more polyisocyanates, and, optionally, one or more chain extension compounds. Chain extension compounds, as the term is being used, are compounds having two or more functional groups, preferably two functional groups, reactive with isocyanate groups, such as the diols, amino alcohols, and diamines. Preferably the polymeric diol-based polyurethane is substantially linear (i.e., substantially all of the reactants are difunctional).

A polysiloxane polyol may be made by hydrosilylating a polysiloxane containing silicon hydrides with an alkyenyl polyoxyalkylene alcohol containing two or three terminal primary hydroxyl groups, for example allylic polyoxyalkylene alcohols such as trimethylolpropane monoallyl ether and pentaerythritol monoallyl ether.

Any of the polyol resins and polymers described above may be derivatized to have carbamate groups according to known methods, for example by reaction of a hydroxyl-functional material with an alkyl carbamate, for example methyl carbamate or butyl carbamate, through what is referred to as "transcarbamation" or "transcarbamoylation." In other methods of forming carbamate-functional resins and polymers for use in the coating compositions, the resin and polymers may be polymerized using a carbamate-functional monomer.

The inventive coating composition may also include at least one crosslinker or curing agent reactive with hydroxyl groups, such as aminoplast crosslinkers having active methylol, methylalkoxy or butylalkoxy groups; polyisocyanate crosslinkers, which may have blocked or unblocked isocyanate groups; polyanhydrides; and polyepoxide functional crosslinkers or curing agents, which could be reactive with the hydroxyls as well as with any carboxylic acid groups of the aryl-modified hyperbranched polyols. Preference is given to aminoplast crosslinkers.

The coating composition may further include solvents, further pigments, fillers, or customary additives. However, preference is given to coating compositions not containing any further pigments except those comprises in the above described pigment paste.

The ratio of pigments (or pigment solids) / total solids of the coating composition may be vary according to individual needs and also depends on the nature of the pigment and on the depth of the color and/or the intensity of the effect it is intended to produce, and also by the dispersibility of the pigments. However, preferred ranges of this ratio are from 0.05 to 0.35, more preferred from 0.05 to 0.2, even more preferred from 0.075 to 0.15 (in each case a weight ratio).

Potential fields of applications of the inventive coating composition are transparent pigmented topcoats (or tinted clearcoats), i.e. compositions that are meant and thus arranged for depicting the upper layer of multilayer assemblies. However, in a preferred embodiment, the inventive coating composition is a basecoat compositions, preferably an aqueous basecoat composition, i.e. a composition meant and thus arranged to depict a color-imparting intermediate coating material that is used in, for example, automotive finishing and general industrial painting. The basecoat material is generally applied to a substrate which has been pretreated with a primer-surfacer and/or further basecoats positioned below the basecoat of the invention. Substrates used may also include existing paint systems, which may optionally require pretreatment as well (by abrading, for example). To protect a basecoat film from environmental effects in particular, at least one additional clearcoat film is generally applied over it. This is generally done in a wet-on-wet process - that is, the clearcoat material is applied without the basecoat film being cured. Curing then takes place, finally, together with the clearcoat.

Also, the present invention relates to a method for producing a coating layer on a substrate by applying an inventive coating composition to a substrate, forming a film from the coating composition applied and curing the applied coating composition to result in a cured coating layer.

Coating compositions can be coated by any of a number of techniques well known in the art. These include, for example, spray coating, dip coating, roll coating, curtain coating, knife coating, spreading, pouring, dipping, impregnating, trickling or rolling, and the like. For automotive body panels, spray coating is typically used. Preference is given to employing spray application methods, such as compressed-air spraying, airless spraying, high-speed rotation, electrostatic spray application, alone or in conjunction with hot spray application such as hot-air spraying, for example.

The coating compositions described herein are employed in particular in the technologically and esthetically particularly demanding field of automotive OEM finishing and also of automotive refinish. The coating compositions can be used in both single-stage and multistage coating methods. The invention, accordingly, also provides multicoat coating systems comprising at least one pigmented basecoat film based on the inventive coating composition and may have least one clearcoat disposed thereon.

The applied coating compositions are normally cured after a certain rest time or "flash" period. The rest time serves, for example, for the leveling and devolatilization of the coating films or for the evaporation of volatile constituents such as solvents. The rest time may be assisted or shortened by the application of elevated temperatures or by a reduced humidity, provided this does not entail any damage or alteration to the coating films, such as premature complete crosslinking, for instance. The thermal curing of the coating compositions has no peculiarities in terms of method but instead takes place in accordance with the typical, known methods such as heating in a forced-air oven or irradiation with IR lamps. The thermal cure may also take place in stages. Another preferred curing method is that of curing with near infrared (NIR) radiation. Although various methods of curing may be used, heat curing is preferred. Generally, heat curing is effected by exposing the coated article to elevated temperatures provided primarily by radiative heat sources. After application, the applied coating layer is cured, for example with heat at temperatures from 30 to 200°C, or from 40 to 190°C, or from 50 to 180°C, for a time of 1 min up to 10 h, more preferably 2 min up to 5 h, and in particular 3 min to 3 h, although longer cure times may also be employed at the temperatures employed for automotive refinish, which are preferably between 30 and 90°C. The inventive coating compositions can be used for both refinish coatings and for original finish coatings that are cured at higher temperatures. A typical method for applying a refinish coating composition includes application and drying with cure at room temperature or at an elevated temperature between 30 and 90°C. OEM coatings are typically cured at higher temperatures, for example from about 110 to about 135°C. The curing time will vary depending on the particular components used, and physical parameters such as the thickness of the layers, however, typical curing times range from about 15 to about 60 minutes, and preferably about 15-25 minutes for blocked acid catalyzed systems and about 10-20 minutes for unblocked acid catalyzed systems. In case of multicoat coating systems comprising at least one pigmented basecoat film based on the inventive coating composition and least one clearcoat disposed thereon curing preferably is conducted together, i.e. basecoat and clearcoat are applied wet-on-wet and then cured in one final curing step.

Cured basecoat layers formed may have a thickness of from about 5 to about 75 Micrometer, depending mainly upon the color desired and the thickness needed to form a continuous layer that will provide the color. Cured clearcoat layers formed typically have thicknesses of from about 30 to about 65 Micrometer.

The coating composition can be applied onto many different types of substrates, including metal substrates such as bare steel, phosphated steel, galvanized steel, or aluminum; and non-metallic substrates, such as plastics and composites. The substrate may also be any of these materials having upon it already a layer of another coating, such as a layer of an electrodeposited primer, primer surfacer, and/or basecoat, cured or uncured.

The substrate may be first primed with an electrodeposition (electrocoat) primer. The electrodeposition composition can be any electrodeposition composition used in automotive vehicle coating operations. Non-limiting examples of electrocoat compositions include electrocoating compositions sold by BASF. Electrodeposition coating baths usually comprise an aqueous dispersion or emulsion including a principal film-forming epoxy resin having ionic stabilization (e.g., salted amine groups) in water or a mixture of water and organic cosolvent. Emulsified with the principal film-forming resin is a crosslinking agent that can react with functional groups on the principal resin under appropriate conditions, such as with the application of heat, and so cure the coating. Suitable examples of crosslinking agents, include, without limitation, blocked polyisocyanates. The electrodeposition coating compositions usually include one or more pigments, catalysts, plasticizers, coalescing aids, antifoaming aids, flow control agents, wetting agents, surfactants, UV absorbers, HALS compounds, antioxidants, and other additives.

The electrodeposition coating composition is preferably applied to a dry film thickness of 10 to 35 µm. After application, the coated vehicle body is removed from the bath and rinsed with deionized water. The coating may be cured under appropriate conditions, for example by baking at from about 135°C to about 190°C for between about 15 and about 60 minutes.

Finally, the present invention relates to a cured coating layer, preferably a cured multilayer coating system prepared according to the pre-described method, wherein the inventive coating composition is applied as basecoat composition. Within this cured coating layer, preferably cured multilayer coating system, the basecoat composition enables optimal coloristic properties like, in particular, high transparency (low scattering) and great color depth.

### Examples

### Measurement methods:

### 1. Determining the non-volatile fraction

The amount of solid content (non-volatile matter, non-volatile content, solid fraction or similar) including the total solid content is determined via DIN EN ISO 3251:2019-09 at 110°C for 60 min.

### 2. Measurement of color values (L*, a*, b*)

The L*a*b* color space or the L*a*b* color model (i.e. the CIELAB color model) is known to a person skilled in the art. The L*a*b* color model is standardized e.g., in DIN EN ISO/CIE 11664-4:2020-03. Each perceivable color in the L*a*b*-color space is described by a specific color location with the coordinates {L*,a*,b*} in a three-dimensional coordinate system. The a*-axis describes the green or red portion of a color, with negative values representing green and positive values representing red. The b*-axis describes the blue or yellow portion of a color, with negative values for blue and positive values for yellow. Lower numbers thus indicate a more bluish color. The L*-axis is perpendicular to this plane and represents the brightness (lightness). The L*-axis has the end points black (L = 0) and white (L = 100). Lower values thus indicate a darker color. The color values L*, a* and b* of a coated substrate (after curing) are determined in accordance with ASTM E 284-81a after its preparation including curing. The values are measured by making use of the instrument BYK-mac i (BYK-Gardner). Analysis of the cured samples is done in accordance with color, sparkle and graininess measurement with the BYK-mac i spectrophotometer standard operating procedure. The samples to be analyzed that are completely cured are wiped down with a microfiber cloth. The BYK-mac i instrument is then placed onto the substrate surface and performs a measurement using D65 light source at -15°, 15°, 25°, 45°, 75° and 110° angles with data recorded for each angle using CIELab settings. This measurement is taken on an individual panel in different positions and values are averaged over the trials and reported. The color values L*, a* and b* reported hereinafter in the experimental part relate to the 110° angle.

Within this application, this method was used because higher particle size pigment agglomerates result in more scattered light which increases the measured lightness values of a cured coating film. As the 110° angle has the longest film path length, it is the most sensitive to detecting increases in scattering. Therefore, L values (lightness) at the 110° angle were used for evaluation and dispersions yielding lower values are more transparent and better.

As a general rule, values above 3.5 in L110° reflects a lightness corresponding to a non-acceptable pigment distribution and thus non-acceptable transparency. Values of below 3.0 may be rated as good, while values of below 2.5 are excellent in pigment distribution/dispersion and thus transparency.

### 1. Synthesis of reaction products (P)

The following passages 1.1. to 1.2 are detailed synthesis protocols for two types of reaction products (P) to be used according to the present invention. The synthesis protocols for these types of reaction products (P) are exemplarily for the reaction products (P) shown in Table 1. That means, while the overall and underlying reaction conditions for reaction where correspondingly applied, specifics regarding educts and molar amounts were, if required or appropriate, adapted. Furthermore, details on actually chosen educts and molar amounts are shown in Table 1.

### 1.1 Reaction product (P) of type 1

Tripentaerythritol (compound (cI)), 2-Naphthoxyacetic acid (compound (d)), DBTO (catalyst, 0.1 wt.-%) and xylene (3.5 wt.-%) were loaded into a reactor, heated to 230°C and then reacted above 200°C for 2 hours, whereby generated water was continuously removed. After this reaction time residual water and xylene were removed, the mixture was cooled to 140°C and ethyl 3-ethoxy propionate (EEP) (26.4 wt.-%) and n-butyl acetate (10.8 wt.-%) was added.

In a sperate reaction step, poly(ethylene glycol) methyl ether and isophorone diisocyanate (IPDI) were reacted in equivalent molar amounts to result in a compound (e). Thereby, poly(ethylene glycol) methyl ether (MPEG 2000) was loaded to a reactor and heated to 110°C (-200 mm HG vacuum) to melt and remove entrained water (60-90 minutes). Then, the reactor was cooled to 60°C and vacuum was discontinued. Then, in a first step, isophorone diisocyanate was directly loaded as quickly as possible, followed by addition of dibutyl dilaurate (0.1 wt.-%), whereby the temperature was kept below 70°C. After 2-3 hours reaction time at 65°C, the reaction mixture was cooled and the mono-isocyanate functional compound (e) was isolated.

In a third reaction step, compound (e) and the reaction product of compounds (cI) and (d) together with 0.06 wt.-% of Dibutyltin dilaurate was heated to 75°C and processed for 1-3 hours until all NCO has been reacted. Afterwards, the reactor was heated to 120°C and a load of succinic anhydride (compound (f)) and EEP (1.3 wt.-%) was added. After a processing time of 2-5 hours at 145°C, the mixture was cooled to 60°C. Then, a load of 0.768 wt.-% EEP and 0.3 wt.-% n-butyl acetate was added. Lastly, the non-volatile content was adjusted by 2-butoxyethanol, whereby contents of about 60 % are appropriate in most cases.

### 1.2 Reaction product (P) of type 2

Again, tripentaerythritol (compound (cI)), 2-Naphthoxyacetic acid (compound (d)), DBTO (catalyst, 0.1 wt.-%) and xylene (3.5 wt.-%) were loaded into a reactor, heated to 230°C and then reacted above 200°C for 2 hours, whereby generated water was continuously removed. After this reaction time residual water and xylene were removed, the mixture was cooled to 140°C and ethyl 3-ethoxy propionate (EEP) (26.4 wt.-%) and n-butyl acetate (10.8 wt.-%) was added.

In a second reaction step, the reaction product of compound (cI) and (d) was charged to a reactor and succinic anhydride (compound (e1)) as well as EEP (1.1 wt.-%) were added. The reaction mixture was processed at 145°C for 2-5 hours to result in an intermediate.

Finally, the beforementioned intermediate and poly(ethylene glycol)methyl ether (MPEG 2000, compound (e2)) were heated in a reactor with 0.11 wt.-% DBTO and 3.5 wt.-% xylene to a temperature of 230°C. Then, the mixture was processed above 200°C for 6 to 7 hours, whereby generated water was continuously removed. After this reaction time residual water and xylene were removed, the mixture was cooled to 140°C and **EEP** (1.0 wt.-%) and n-butyl acetate (0.4 wt.-%) was added. Finally, if appropriate, the non-volatile content was adjusted by addition of 2-butoxyethanol.

### 1.3 Remark:

Instead of using the above product of compound (cI) and (d), the following Table 1 also shows reaction products (P) produced via use of products being prepared by first reacting dipentaerythritol and adipic acid in a molar ratio of 2:1 by standard esterification reaction to result in a compound (cII). This compound (cII), containing formally and on average 10 hydroxyl groups per molecule, was then correspondingly applied within the further reaction process.

### 1.4 Produced reaction products (P)

Table 1 shows a list of reaction products.

Thereby, the nominal molar ratio w/x/y/z depicts, for type 1 reaction products, the nominal ratio "hydroxyl groups of the core moiety (compound (cI) or (cII)) (w) / carboxy functions of compound (d) (x) / NCO functions of compound (e) (y) / reactive carboxyl sides of anhydride compound (f) (z)".

For type 2 reaction products, the nominal ratio q/r/s/t depicts "hydroxyl groups of the core moiety (compound (cI) or (cII)) (q) / carboxy functions of compound (d) (r) / carboxyl sides of anhydride compound (e1) reactive with hydroxyl group of the core (s) / hydroxyl groups of compound (e2) reactive with resulted carboxyl sides of ring opened anhydride compound (e1) (t)".

As a comparative reaction product (CP) a known pigment dispersant additive also comprising polyalkylene oxide units (in form of reacted MPEG2000) was applied. The dispersant as applied was composed of 35.5 wt.-% of resin solids (non-volatile) and 64.5 wt.-% of solvents. The solvent content of the dispersant is as follows: 28.4 wt.-% propylene glycol n-propyl ether, 6.1 wt.-% methyl isoamyl ketone (MIAK), 28.5 wt.-% deionized water and 1.5 wt.-% mineral spirits. The resin present in the dispersant is prepared as disclosed in example 5 of US patent no. 5,270,399.

**Table 1: Reaction Products (P)**

| **Reaction product** | **polyol (c)** | **compound (d)** | **Compound (e)** | **Compounds (e1) and (e2)** | **Compound (f)** | **Nominal molar ratio w/x/y/z** | **Nominal molar ratio q/r/s/t** |
|---|---|---|---|---|---|---|---|
| | | | | | | | |
| P1 | Tripentaerythritol | 2-Naphthoxyacetic acid | IPDI-MPEG2000 | n/a | Succinic anhydride | 8/4/1/3 | n/a |
| P2 | Tripentaerythritol | 2-Naphthoxyacetic acid | IPDI-MPEG2000 | n/a | Succinic anhydride | 8/3/1/4 | n/a |
| P3 | Dipentaerythritol + Adipic acid (molar ratio 2:1) | 2-Naphthoxyacetic acid | IPDI-MPEG2000 | n/a | Succinic anhydride | 10/5/1/4 | n/a |
| P4 | Tripentaerythritol | 2-Naphthoxyacetic acid | IPDI-MPEG2000 | n/a | Succinic anhydride | 8/3/3/2 | n/a |
| P5 | Tripentaerythritol | 2-Naphthoxyacetic acid | IPDI-MPEG750 | n/a | Succinic anhydride | 8/3/3/2 | n/a |
| P6 | Tripentaerythritol | 2-Naphthoxyacetic acid | IPDI-MPEG500 | n/a | Succinic anhydride | 8/3/3/2 | n/a |
| P7 | Dipentaerythritol + Adipic acid (molar ratio 2:1) | 2-Naphthoxyacetic acid | IPDI-MPEG2000 | n/a | Succinic anhydride | 10/4/3/3 | n/a |
| P8 | Dipentaerythritol + Adipic acid (molar ratio 2:1) | 2-Naphthoxyacetic acid | IPDI-MPEG2000 | n/a | Succinic anhydride | 10/4/2/4 | n/a |
| P9 | Tripentaerythritol | 2-Naphthoxyacetic acid | n/a | Succinic anhydride and MPEG 2000 | n/a | n/a | 8/4/4/2 |

### 2 Preparation of pigment pastes and coating compositions

### 2.1 Pigment pastes

Pigment pastes were produced according to the following general procedure: A given pigment is weighted out into jar. Then, a given reaction product (P) as dispersant is added to a separate container to reach a predetermined dispersant on pigment level. The reaction product then is slowly diluted in water under agitation. Upon complete dissolution, Propylene Glycol n-butyl ether (Dowanol PnB) is added dropwise under agitation to result in a solution which no longer is turbid. The dispersion of the reaction product then is mixed with the pigment while stirring to create a consistent pre-paste formulation/suspension. Afterwards, if required, a step of course grinding (milling) was conducted. In any case, fine grinding (milling) took place.

Blue pigment pastes: For the blue pigment pastes, Palomar Blue 248-4806, Blue 15:1 (Sun Chemical) was applied. 10 parts by weight of pigment was added to a stirred mixture of specified reaction product as dispersant containing also propylene glycol n-butyl ether (Dowanol PnB) and water. The resulting suspension is agitated using a Cowles blade for 5 minutes. The pH is adjusted to 8.0 using a 20% DMEOA in water solution, measured with Starter 300 pH Portable pH meter (Ohaus Corporation, Parsippany, New Jersey, USA). Pigment suspension is transferred to an 8 oz mixing jar (Qorpak) and a 2:1 ratio of 0.3 - 0.4 mm YTZ milling media (Fox Industries) and agitated using a LAU shaker (LAU disperser DAS 200 - LAU GmbH) for 10 hours. The resulting paste is separated by gravity filtration from the 0.3 - 0.4 mm YTZ media and used with no further modifications in coating compositions.

Black pigment pastes: For the black pigment pastes, Paliogen Black L0086 was applied. Again 10 parts by weight of pigment was added to a stirred mixture of specified reaction product as dispersant containing also propylene glycol n-butyl ether (Dowanol PnB) or Dowanol PnP and water. The resulting suspension is agitated using a Cowles blade for 5 minutes. The pH is adjusted to 8.1 using a 20% DMEOA in water solution, measured with Starter 300 pH Portable pH meter (Ohaus Corporation, Parsippany, New Jersey, USA). Pigment suspension is transferred to an 8 oz mixing jar (Qorpak) and a 2:1 ratio of 0.9 - 1.1 mm YTZ milling media (Fox Industries) and agitated using a LAU shaker (LAU disperser DAS 200 - LAU GmbH) for 4 hours for course grinding. The 0.9 - 1.1 mm YTZ media is separated using gravity filtration. The as collected paste is transferred into an 8 oz. mixing jar (Qorpak) and infused with 0.3 - 0.4 mm YTZ milling media in a 2:1 bead to paste ratio and agitated using a LAU shaker (LAU disperser DAS 200 - LAU GmbH) for 12 hours for fine grinding. The resulting final paste product is filtered to remove the 0.3 - 0.4 mm media and used with no further modifications in coating compositions.

Tables 2 and 3 give more details on the pigment pastes. All amounts refer to weight. In case of components available as dispersions/solutions and thus comprising solvents, the amounts refer to the component as applied (i.e. with solvent), while Dispersant to Pigment ratios refer to only dispersant (effective amount excluding solvents) and pigment.

### 2.2. Coating compositions

The compositions were produced by addition of the above-mentioned pigment pastes to non-tinted, one component composition intermediates followed by adjustment for solids content by using a polyurethane resin component, pH adjustment to 8.1 by using N.N-dimethylethanolamine (20 % in water) and adjustment to a target pigment concentration by addition of water. The non-tinted intermediate was of aqueous type and contained, among further components, Laponite (Fa. BYK) as rheology modifier and, as binder components, polyurethane, acrylic resins and polyester. Furthermore, a melamine resin (Cymel 327, Fa Allnex) was comprised as crosslinker component.

This resulted in production of inventive coating compositions, in this case transparent blue basecoat compositions or black basecoat compositions.

Tables 2 and 3 also give more details on the coating compositions. All amounts refer to weight. In case of components available as dispersions/solutions and thus comprising solvents, the amounts refer to the component as applied (i.e. with solvent), while Dispersant to Pigment ratios refer to only dispersant (effective amount excluding solvents) and pigment.

### 3. Preparation of cured coatings and evaluation

### 3.1 Application of transparent basecoat compositions comprising blue pigment

The compositions were applied as a thin film to a melinex drawdown sheet (Puetz GmbH + C0. Folien KG, Taunusstein, Germany) using a 100 Micrometer gap on a Byk drawdown bar. The wet transparent basecoat film was allowed to flash for 15 minutes under ambient conditions and then baked for 25 minutes at 130°C.

Afterwards, the cured coatings on melinex substrates were analyzed using the Byk Mac i spectrophotometer. The sample is positioned over a mirror with the coating facing the mirror surface and the melinex surface facing the Byk Mac i instrument. Sample is illuminated with d65 light at 110 degrees off specular using CIELab settings. Sampling of a given coating is done at least 5 times in different areas of the coating film.

### 3.2 Application of straight shade basecoat compositions comprising black pigment

The compositions were applied to a steel panels (T12M black and white panels, Leneta) using a 200 Micrometer gap on a Byk drawdown bar. The panels and thus coatings were flashed for 10 minutes at 40°C. Then, the panels were spray coated with a commercially available clearcoat composition (ProGloss^{®} 2K4 from BASF Corporation, Coatings Division, USA) and baked at 130°C for 25 minutes.

Afterwards, cured coatings on steel substrates were analyzed using the Byk Mac i spectrophotometer. The sample is positioned over a mirror with the coating facing the mirror surface and the melinex surface facing the Byk Mac i instrument. Sample is illuminated with d65 light at 110 degrees off specular using CIELab settings. Sampling of a given coating is done at least 5 times in different areas of the coating film.

Tables 2 and 3 also give the results on the respectively produced cured coatings and multilayer coatings based on the inventive and comparative coating compositions.

Table 2 clearly shows that the inventive coatings show at least acceptable, but often even good or excellent transparency and thus pigment distribution. On the other side, the comparative system in this regard is not acceptable. For the black compositions and coatings, the inventive systems also show significantly reduced L(110°) values for the cured coatings compared to the comparative system.

Overall, the data show that the dispersion capability of the inventively used reaction products / dispersants is significantly better than of the comparative dispersant (CP).

**Table 2: Reaction products, transparent coating compositions comprising blue pigment, respective cured coatings and their performance properties**

| **Pigment paste** | | **C1** | **E1** | **E2** | **E3a** | **E3b** | **E4a** | **E4b** | **E5a** | **E5b** | **E6a** | **E6b** | **E7a** | **E7b** | **E8a** | **E8b** |
|---|---|---|---|---|---|---|---|---|---|---|---|---|---|---|---|---|
| | | | | | | | | | | | | | | | | |
| Reaction product | CP | 24,78 | | | | | | | | | | | | | | |
| | P1 | | 12,56 | | | | | | | | | | | | | |
| | P2 | | | 12,27 | | | | | | | | | | | | |
| | P3 | | | | 9,58 | 11,98 | | | | | | | | | | |
| | P4 | | | | | | 9,71 | 12,14 | | | | | | | | |
| | P5 | | | | | | | | 9,74 | 12,18 | | | | | | |
| | P6 | | | | | | | | | | 9,95 | 12,4 | | | | |
| | P7 | | | | | | | | | | | | 9,77 | 12,21 | | |
| | P8 | | | | | | | | | | | | | | 9,82 | 12,27 |
| | | | | | | | | | | | | | | | | |
| Pigment | Palomar Blue 248-4806 | 25,65 | 10 | 10 | 10 | 10 | 10 | 10 | 10 | 10 | 10 | 10 | 10 | 10 | 10 | 10 |
| Organic solvent | Dowanol PnB | 0 | 2 | 2,5 | 2,5 | 2,5 | 2,5 | 2,5 | 2,5 | 2,5 | 2,5 | 2,5 | 2,5 | 2,5 | 2,5 | 2,5 |
| Water | | 49,57 | 75,44 | 75,23 | 77,92 | 75,52 | 77,79 | 75,36 | 77,76 | 75,32 | 77,55 | 75,1 | 77,73 | 75,29 | 77,68 | 75,23 |
| | | | | | | | | | | | | | | | | |
| Dispersant / Pigment Ratio | | 0,34 | 0,75 | 0,75 | 0,6 | 0,75 | 0,6 | 0,75 | 0,6 | 0,75 | 0,6 | 0,75 | 0,6 | 0,75 | 0,6 | 0,75 |

**Table 2 - follow up**

| **Coating composition** | | **CC1** | **CE1** | **CE2** | **CE3a** | **CE3b** | **CE4a** | **CE4b** | **CE5a** | **CE5b** | **CE6a** | **CE6b** | **CE7a** | **CE7b** | **CE8a** | **CE8b** |
|---|---|---|---|---|---|---|---|---|---|---|---|---|---|---|---|---|
| | | | | | | | | | | | | | | | | |
| One component intermediate | | 19,5 | 19,5 | 19,5 | 19,5 | 19,5 | 19,5 | 19,5 | 19,5 | 19,5 | 19,5 | 19,5 | 19,5 | 19,5 | 19,5 | 19,5 |
| Polyurethan resin component | | 1,86 | 0,88 | 0,88 | 1,24 | 0,88 | 1,24 | 0,88 | 1,24 | 0,88 | 1,24 | 0,88 | 1,24 | 0,88 | 1,24 | 0,88 |
| Water | | 6,51 | 3,54 | 3,54 | 3,17 | 3,54 | 3,17 | 3,54 | 3,17 | 3,54 | 3,17 | 3,54 | 3,17 | 3,54 | 3,17 | 3,54 |
| Amount of given paste added to composition | | 2,53 | 6,5 | 6,5 | 6,5 | 6,5 | 6,5 | 6,5 | 6,5 | 6,5 | 6,5 | 6,5 | 6,5 | 6,5 | 6,5 | 6,5 |
| | | | | | | | | | | | | | | | | |
| Pigment Solids / Total Composition Solids | | 0,091 | 0,091 | 0,091 | 0,091 | 0,091 | 0,091 | 0,091 | 0,091 | 0,091 | 0,091 | 0,09 | 0,091 | 0,091 | 0,091 | 0,091 |
| | | | | | | | | | | | | | | | | |
| L(110°) of cured coating | | 4,27 | 2,43 | 2,35 | 3,24 | 2,19 | 3,18 | 2,3 | 2,74 | 2,91 | 2,87 | 2,96 | 2,71 | 2,35 | 3,21 | 2,23 |

**Table 3: Reaction products, coating compositions comprising black pigment, respective cured coatings and their performance properties**

| **Pigment paste** | | **C2** | **E9a** | **E9b** | **E10** | **E11** | **E12** |
|---|---|---|---|---|---|---|---|
| | | | | | | | |
| Reaction product | CP | 28,69 | | | | | |
| | P9 | | 8,31 | 10,39 | | | |
| | P1 | | | | 12,21 | | |
| | P2 | | | | | 12,27 | |
| | P3 | | | | | | 11,98 |
| | | | | | | | |
| Pigment | Paliogen Black L0086 | 27,87 | 10 | 10 | 10 | 10 | 10 |
| Organic solvent | Dowanol PnB | | 1,75 | 1,75 | 1,75 | 1,75 | 1,75 |
| Organic solvent | Dowanol PnP | 3,88 | | | | | |
| Water | | 39,58 | 79,94 | 77,86 | 76,04 | 75,98 | 76,27 |
| | | | | | | | |
| Dispersant / Pigment Ratio | | 0,37 | 0,6 | 0,75 | 0,75 | 0,75 | 0,75 |

**Table 3 - Follow-up**

| **Coating composition** | | **CC2** | **CE9a** | **CE9b** | **CE10** | **CE11** | **CE12** |
|---|---|---|---|---|---|---|---|
| | | | | | | | |
| One component intermediate | | 19,5 | 19,5 | 19,5 | 19,5 | 19,5 | 19,5 |
| Polyurethan resin component | | 1,34 | 0,51 | 0 | 0 | 0 | 0 |
| Water | | 6,07 | 0,65 | 1,19 | 1,19 | 1,19 | 1,19 |
| Amount of given paste added to composition | | 3,5 | 9,75 | 9,75 | 9,75 | 9,75 | 9,75 |
| | | | | | | | |
| Pigment Solids / Total Composition Solids | | 0,13 | 0,13 | 0,13 | 0,13 | 0,13 | 0,13 |
| | | | | | | | |
| L(110°) of cured coating | | 3,22 | 3,05 | 1,95 | 1,62 | 1,39 | 1,49 |

## Claims

1. Coating composition comprising a pigment paste, wherein the pigment paste comprises an organic pigment and an aryl-modified branched reaction product (P), comprising, in reacted form,
(a) a polyhydroxy-functional core moiety, and
(b) a shell moiety comprising polyalkylene oxide units and aromatic units, whereby the polyalkylene oxide units and aromatic units are covalently linked to the core moiety via units comprising functional groups being reactive with hydroxy groups.

2. Coating composition according to claim 1, wherein the shell moiety further comprises acid groups which are covalently linked to the core moiety via units comprising functional groups being reactive with hydroxy groups.

3. Coating composition according to claim 1 or 2, wherein the functional groups being reactive with hydroxy groups are selected from carboxyl groups, cyclic carboxylic acid anhydride groups and isocyanate groups.

4. Coating composition according to one or more of claims 1 to 3, wherein the aromatic units are appended via reaction of hydroxyl groups of the core moiety with at least one aromatic or araliphatic carboxylic acid.

5. Coating composition according to one or more of claims 1 to 4, wherein the polyalkylene oxide units are appended via reaction of hydroxyl groups of the core moiety with at least one component (e) having a polyalkylene oxide unit and an isocyanate group.

6. Coating composition according to one or more of claims 1 to 5, wherein the polyalkylene oxide units are polypropylene oxides and/or polyethylene oxides as well as mixed copolymers thereof, preferably polyethylene oxides.

7. Coating composition according to one or more of claims 1 to 6, wherein the acid number of the reaction product (P) is from 10 to 60 mg KOH/g.

8. Coating composition according to one or more of claims 1 to 7, wherein the ratio of the reaction product (P) and the organic pigment in the pigment paste is at least 0.55 by weight.

9. Coating composition according to one or more of claims 1 to 8, wherein the pigment paste comprises 1 to 20 wt.-% of reaction product (P), 2 to 40 wt.-% of organic pigment, 40 to 90 wt.-% of water and 2 to 20 wt.-% of organic solvent, in each case based on the total weight of the composition.

10. Coating composition according to one or more of claims 1 to 9, wherein ratio of pigments (or pigment solids) / total solids of the coating composition is from 0.05 to 0.2.

11. Coating composition according to one or more of claims 1 to 10, wherein the coating composition contains a hydroxyl-functional acrylic polymer, hydroxyl-functional polyester, and/or a hydroxyl-functional polyurethane.

12. Coating composition according to one or more of claims 1 to 11, wherein the coating composition is aqueous.

13. Method of producing a cured coating on a substrate, comprising
(i) applying a coating composition according to one or more of claims 1 to 12 on a substrate,
(ii) forming a film from the applied coating composition, and
(iii) curing the applied film according to step (ii).

14. Method according to claim 13, whereby
- between step (ii) and (iii) a clearcoat composition is applied to the film according to step (ii), and
- step (iii) also includes curing of the applied clearcoat composition, meaning that both basecoat and clearcoat film are cured together, resulting in a multilayer coating.

15. Coating or multilayer coating produced according to claims 13 and 14.

## Patentansprüche

1. Beschichtungszusammensetzung, die eine Pigmentpaste umfasst, wobei die Pigmentpaste ein organisches Pigment und ein arylmodifiziertes verzweigtes Reaktionsprodukt (P) umfasst, welches in umgesetzter Form Folgendes umfasst:
(a) eine polyhydroxyfunktionelle Kerngruppierung und
(b) eine Schalengruppierung, die Polyalkylenoxideinheiten und aromatische Einheiten umfasst, wobei die Polyalkylenoxideinheiten und aromatischen Einheiten über Einheiten mit funktionellen Gruppen, die gegenüber Hydroxygruppen reaktiv sind, kovalent mit der Kerngruppierung verknüpft sind.

2. Beschichtungszusammensetzung nach Anspruch 1, wobei die Schalengruppierung ferner Säuregruppen umfasst, die über Einheiten mit funktionellen Gruppen, die gegenüber Hydroxygruppen reaktiv sind, kovalent mit der Kerngruppierung verknüpft sind.

3. Beschichtungszusammensetzung nach Anspruch 1 oder 2, wobei die funktionellen Gruppen, die gegenüber Hydroxygruppen reaktiv sind, aus Carboxylgruppen, cyclischen Carbonsäureanhydridgruppen und Isocyanatgruppen ausgewählt sind.

4. Beschichtungszusammensetzung nach einem oder mehreren der Ansprüche 1 bis 3, wobei die aromatischen Einheiten durch Reaktion von Hydroxylgruppen der Kerngruppierung mit mindestens einer aromatischen oder araliphatischen Carbonsäure angehängt sind.

5. Beschichtungszusammensetzung nach einem oder mehreren der Ansprüche 1 bis 4, wobei die Polyalkylenoxideinheiten durch Reaktion von Hydroxylgruppen der Kerngruppierung mit mindestens einer Komponente (e) mit einer Polyalkylenoxideinheit und einer Isocyanatgruppe angehängt sind.

6. Beschichtungszusammensetzung nach einem oder mehreren der Ansprüche 1 bis 5, wobei es sich bei den Polyalkylenoxideinheiten um Polypropylenoxide und/oder Polyethylenoxide sowie gemischte Copolymere davon, vorzugsweise Polyethylenoxide, handelt.

7. Beschichtungszusammensetzung nach einem oder mehreren der Ansprüche 1 bis 6, wobei die Säurezahl des Reaktionsprodukts (P) 10 bis 60 mg KOH/g beträgt.

8. Beschichtungszusammensetzung nach einem oder mehreren der Ansprüche 1 bis 7, wobei das Gewichtsverhältnis von Reaktionsprodukt (P) und organischem Pigment in der Pigmentpaste mindestens 0,55 beträgt.

9. Beschichtungszusammensetzung nach einem oder mehreren der Ansprüche 1 bis 8, wobei die Pigmentpaste 1 bis 20 Gew.-% Reaktionsprodukt (P), 2 bis 40 Gew.-% organisches Pigment, 40 bis 90 Gew.-% Wasser und 2 bis 20 Gew.-% organisches Lösungsmittel, jeweils bezogen auf das Gesamtgewicht der Zusammensetzung, umfasst.

10. Beschichtungszusammensetzung nach einem oder mehreren der Ansprüche 1 bis 9, wobei das Verhältnis von Pigmenten (oder Pigmentfeststoffen) zu gesamten Feststoffen der Beschichtungszusammensetzung 0,05 bis 0,2 beträgt.

11. Beschichtungszusammensetzung nach einem oder mehreren der Ansprüche 1 bis 10, wobei die Beschichtungszusammensetzung ein hydroxylfunktionelles Acrylpolymer, einen hydroxylfunktionellen Polyester und/oder ein hydroxylfunktionelles Polyurethan enthält.

12. Beschichtungszusammensetzung nach einem oder mehreren der Ansprüche 1 bis 11, wobei die Beschichtungszusammensetzung wässrig ist.

13. Verfahren zur Herstellung einer gehärteten Beschichtung auf einem Substrat, umfassend
(i) Aufbringen einer Beschichtungszusammensetzung nach einem oder mehreren der Ansprüche 1 bis 12 auf ein Substrat,
(ii) Bilden eines Films aus der aufgebrachten Beschichtungszusammensetzung und
(iii) Härten des in Schritt (ii) aufgebrachten Films.

14. Verfahren nach Anspruch 13, wobei
- zwischen Schritt (ii) und (iii) eine Klarlackzusammensetzung auf den Film gemäß Schritt (ii) aufgebracht wird und
- Schritt (iii) auch das Härten der aufgebrachten Klarlackzusammensetzung einschließt, was bedeutet, dass sowohl Basislack- als auch Klarlackfilm zusammen gehärtet werden, was eine mehrschichtige Beschichtung ergibt.

15. Beschichtung oder mehrschichtige Beschichtung, hergestellt nach den Ansprüchen 13 und 14.

## Revendications

1. Composition de revêtement comprenant une pâte pigmentaire, dans laquelle la pâte pigmentaire comprend un pigment organique et un produit de réaction ramifié modifié par aryle (P), comprenant, sous une forme ayant réagi,
(a) un groupement de noyau fonctionnalisé par polyhydroxy, et
(b) un groupement d'enveloppe comprenant des motifs de poly(oxyde d'alkylène) et des motifs aromatiques, les motifs de poly(oxyde d'alkylène) et les motifs aromatiques étant liés de manière covalente au groupement de noyau par l'intermédiaire de motifs comprenant des groupes fonctionnels qui sont réactifs avec des groupes hydroxy.

2. Composition de revêtement selon la revendication 1, dans laquelle le groupement d'enveloppe comprend en outre des groupes de type acide qui sont liés de manière covalente au groupement de noyau par l'intermédiaire de motifs comprenant des groupes fonctionnels qui sont réactifs avec des groupes hydroxy.

3. Composition de revêtement selon la revendication 1 ou 2, dans laquelle les groupes fonctionnels qui sont réactifs avec des groupes hydroxy sont choisis parmi des groupes carboxyle, des groupes anhydride d'acide carboxylique cyclique et des groupes isocyanate.

4. Composition de revêtement selon une ou plusieurs des revendications 1 à 3, dans laquelle les motifs aromatiques sont ajoutés via une réaction de groupes hydroxyle du groupement de noyau avec au moins un acide carboxylique aromatique ou araliphatique.

5. Composition de revêtement selon une ou plusieurs des revendications 1 à 4, dans laquelle les motifs poly(oxyde d'alkylène) sont ajoutés via une réaction de groupes hydroxyle du groupement de noyau avec au moins un composant (e) ayant un motif poly(oxyde d'alkylène) et un groupe isocyanate.

6. Composition de revêtement selon une ou plusieurs des revendications 1 à 5, dans laquelle les motifs poly(oxyde d'alkylène) sont des poly(oxydes de propylène) et/ou des poly(oxydes d'éthylène) ainsi que des copolymères mixtes de ceux-ci, de préférence des poly(oxydes d'éthylène).

7. Composition de revêtement selon une ou plusieurs des revendications 1 à 6, dans laquelle l'indice d'acide du produit de réaction (P) est de 10 à 60 mg de KOH/g.

8. Composition de revêtement selon une ou plusieurs des revendications 1 à 7, dans laquelle le rapport du produit de réaction (P) et du pigment organique dans la pâte pigmentaire est d'au moins 0,55 en poids.

9. Composition de revêtement selon une ou plusieurs des revendications 1 à 8, dans laquelle la pâte pigmentaire comprend 1 à 20 % en poids de produit de réaction (P), 2 à 40 % en poids de pigment organique, 40 à 90 % en poids d'eau et 2 à 20 % en poids de solvant organique, en chaque cas par rapport au poids total de la composition.

10. Composition de revêtement selon une ou plusieurs des revendications 1 à 9, dans laquelle le rapport de pigments (ou solides pigmentaires) / solides totaux de la composition de revêtement est de 0,05 à 0,2.

11. Composition de revêtement selon une ou plusieurs des revendications 1 à 10, dans laquelle la composition de revêtement contient un polymère acrylique à fonction hydroxyle, un polyester à fonction hydroxyle et/ou un polyuréthanne à fonction hydroxyle.

12. Composition de revêtement selon une ou plusieurs des revendications 1 à 11, dans laquelle la composition de revêtement est aqueuse.

13. Procédé de production d'un revêtement durci sur un substrat, comprenant
(i) l'application d'une composition de revêtement selon une ou plusieurs des revendications 1 à 12 sur un substrat,
(ii) la formation d'un film à partir de la composition de revêtement appliquée, et
(iii) le durcissement du film appliqué selon l'étape (ii).

14. Procédé selon la revendication 13, moyennant quoi
- entre les étapes (ii) et (iii), une composition de revêtement transparent est appliquée sur le film selon l'étape (ii), et
- l'étape (iii) comprend également le durcissement de la composition de revêtement transparent appliquée, ce qui signifie qu'à la fois le revêtement de base et le film de revêtement transparent sont durcis ensemble, ce qui donne un revêtement multicouche.

15. Revêtement ou revêtement multicouche produit selon les revendications 13 et 14.
